Europäisches Patentamt

European Patent Office

Office européen des brevets

(19)

(11) Veröffentlichungsnummer: **0 129 613**
**B1**

(12) **EUROPÄISCHE PATENTSCHRIFT**

(45) Veröffentlichungstag der Patentschrift:
11.03.87

(51) Int. Cl.⁴: **A 01 D 41/12,** A 01 F 12/60

(21) Anmeldenummer: **83106266.6**

(22) Anmeldetag: **28.06.83**

(54) **Vorrichtung zum Anzeigen der Füllmenge des Erntegutes im Sammelbehälter einer Erntegutmaschine, insbesondere Mähdrescher.**

(43) Veröffentlichungstag der Anmeldung:
**02.01.85 Patentblatt 85/1**

(45) Bekanntmachung des Hinweises auf die Patenterteilung:
**11.03.87 Patentblatt 87/11**

(84) Benannte Vertragsstaaten:
**BE DE FR GB IT SE**

(56) Entgegenhaltungen:
**FR - A - 1 120 296
FR - A - 1 124 873
GB - A - 1 064 856
US - A - 2 627 244
US - A - 3 246 313**

(73) Patentinhaber: **DEERE & COMPANY, 1 John Deere Road, Moline Illinois 61265 (US)**

(72) Erfinder: **Peiler, Rolf, Heiligentalstrasse 11, D-6660 Zweibrücken (DE)**
Erfinder: **Favache, Serge, Röntgenstrasse 3, D-6660 Zweibrücken (DE)**

(74) Vertreter: **Sartorius, Peter et al, DEERE & COMPANY European Office, Patent Department Postfach 503 Steubenstrasse 36-42, D-6800 Mannheim 1 (DE)**

ACTORUM AG

## Beschreibung

Die Erfindung bezieht sich auf eine Vorrichtung zum Anzeigen der Füllmenge des Erntegutes im Sammelbehälter einer Erntegutmaschine, insbesondere Mähdrescher, die aus einem im Sammelbehälter auf einem oder mehreren Bolzen schwenkbar gelagerten Schalthebel und einem über diesen betätigbaren elektrischen Schaltgeber gebildet ist, der einer am Fahrerstand vorgesehenen Anzeigevorrichtung eine Schaltinformation zuführt, wobei der Schalthebel mit Bezug auf seine Schwenkrichtung sich von dem Schüttkegel weg erstreckende, abgewinkelte, seitliche Leitelemente aufweist und seine Schwenkachse quer zu einer Fallinie des Schüttkegels des im Sammelbehälter aufgenommenen Erntegutes verläuft und die in Richtung des Schüttkegels zeigende Vorderseite einer Platte des Schalthebels gegen den geneigt verlaufenden Teil des Schüttkegels zur Anlage kommt und über diesen Teil bzw. das am Schüttkegel abrutschende Erntegut nach innen in eine den Schaltgeber betätigende Stellung bewegt wird.

Es ist eine Anzeigevorrichtung für einen Sammelbehälter bekannt (US-A-2 627 244), die aus einer am oberen Teil des Mähdreschers an einem horizontal verlaufenden Bolzen schwenkbar angeordneten Klappe besteht, die über einen Balg mit der einen Seitenwand des Sammelbehälters verbunden ist, um auf diese Weise hinter der Klappe einen entsprechenden Freiraum zu schaffen, so dass beim Befüllungsvorgang des Sammelbehälters die Klappe an die Seitenwand heranschwenken kann und ein entsprechendes Gestänge betätigen kann, das mit einer schwenkbar gelagerten Flagge verbunden ist. Eine derartige Vorrichtung ist jedoch ungeeignet, im unteren Bereich des Sammelbehälters vorzusehen, da der Balg bei sich füllendem Sammelbehälter zerstört würde. Ausserdem ist eine derartige Vorrichtung aufwendig und teuer.

Es ist bereits eine Anzeigevorrichtung für einen Sammelbehälter eines Mähdreschers der eingangs aufgeführten Art bekannt (US-A-3 246 313), die aus einer im Sammelbehälter angeordneten Wippe besteht, an deren einem Ende eine Platte und an deren anderem Ende ein Gegengewicht angeordnet ist, wobei zwischen der Anlenkstelle der Wippe und dem Gegengewicht ein Quecksilberschalter vorgesehen ist, der bei einer bestimmten Lage der Wippe eine Schaltfunktion am Bedienungsstand des Mähdreschers auslöst und somit anzeigt, dass der Sammelbehälter vollständig mit Erntegut gefüllt ist. Hierzu ist die Wippe im Bereich der Oberkante mittig im Sammelbehälter gelagert und schwimmt auf der Oberfläche des im Sammelbehälter angesammelten Erntegutes. Eine derartige Wippe kann jedoch nicht im unteren Bereich des Sammelbehälters vorgesehen werden, um beispielsweise die einzelnen Füllphasen des Sammelbehälters zu erfassen, da eine derartige Wippe in das ansteigende Erntegut eintaucht, so dass eine Schaltfunktion der Wippe nicht mehr gewährleistet ist.

Demgegenüber liegt der Erfindung die Aufgabe zugrunde, den Schalthebel im Sammelbehälter derart anzuordnen und auszubilden, dass bei sich anhäufendem Erntegut im Sammelbehälter jederzeit eine entsprechende Füllphase abgetastet werden kann, um die Bedienungsperson am Fahrerstand entsprechend zu informieren. Diese Aufgabe ist dadurch gelöst worden, dass die an der Rückseite der Platte freitragend angeordneten Leitelemente mit der Platte einen nach hinten offenen Freiraum bilden. Durch die vorteilhafte Ausbildung des Schalthebels mit an der dem Erntegut abgewandten Seite angeordneten Leitelementen, die freitragend angeordnet sind, erhält man auf einfache Weise den notwendigen Freiraum hinter der Platte, so dass sich hinter der Platte kein Erntegut ansammeln kann, wenn der Sammelbehälter mit Erntegut befüllt wird. Durch diese Ausbildung des Schalthebels wird also gewährleistet, dass die Platte stets auf dem Erntegut aufliegt und die gewünschte Schaltfunktion zur Information der Bedienungsperson auslöst. Somit kann also der Schalthebel auf jede beliebige Höhe im Sammelbehälter angeordnet werden, um die entsprechende Füllhöhe des Erntegutes fortlaufend abzutasten. Dabei ist es vorteilhaft, dass der Schalthebel jeweils im Bereich der Böschung bzw. der Fallinie des Schüttkegels liegt, um das neu hinzukommende Erntegut, das am Schüttkegel entsprechend abrutscht, einwandfrei abzutasten. Selbst wenn sich oberhalb des Schalthebels Erntegut ansammeln sollte, führt das nicht zu einer Beschädigung des Schalthebels, da der Schalthebel durchgehend massiv ausgebildet ist.

In weiterer Ausgestaltung der Erfindung ist es vorteilhaft, dass der Schalthebel an seiner oberen Kante einen mit dem Schalthebel einen stumpfen Winkel bildenden, fest verbundenen Schenkel aufweist, der zur Aufnahme von zwei Bolzen Bohrungen aufweist, deren Durchmesser derart gross sind, dass der Schenkel auf den Bolzen geneigt verlaufend aufsitzt, wobei die Kanten der Bohrungen in den Endlagestellungen des Schalthebels als Anschläge dienen. Da der Schalthebel mit seinen entsprechenden Schenkeln auf dem Bolzen verschwenkbar angeordnet ist, erhält man auf einfache Weise eine Fixierung des Schalthebels in zwei Endlagestellungen, wobei hierzu die Bohrungen, die etwas grösser sind als die Durchmesser der Bolzen, mit ihren Kanten als Anlage dienen, die eine weitere Bewegung des Schalthebels in die eine oder andere Richtung, nach Erreichung der Endlagestellung, verhindern. Dabei ist es vorteilhaft, dass der Schalthebel auf dem aufrechtstehenden Bolzen verschwenkbar und verschiebbar gelagert ist, wobei bei Kontaktaufnahme des Schalthebels mit dem Erntegut bzw. beim Eintauchen in das Erntegut der Schalthebel aus dem Erntegut herausbewegbar ist. Durch eine entsprechende Länge der Bolzen kann der Schalthebel nicht nur auf dem Bolzen verschwenkt, sondern auch auf diesem axial verschoben werden, so dass bei Kontaktaufnahme des Schalthebels mit dem Erntegut der Schalthebel stets nach oben bewegt wird und dabei auch ein wenig auf dem Bolzen axial verschoben wird, so dass selbst dann, wenn das Erntegut den Schalthebel teilweise umgibt, dieser wieder aus dem Erntegut herausbewegt werden kann, um die Füllhöhe des Erntegutes anzuzeigen.

Eine einfache Schaltvorrichtung erhält man dadurch, dass die beiden in etwa vertikal verlaufenden Bolzen mit Abstand an einer im Sammelbehälter vorgesehenen Halterung angeordnet sind, die zur Aufnahme eines Schaltkontaktes bzw. des als Schaltgeber ausgebildeten Magnetschalters dient, gegen den ein Magnet bewegbar ist, der auf dem Schalthebel angeordnet ist. Dabei ist es vorteilhaft, dass der Schaltkontakt bzw. der Magnetschalter mit dem zugehörigen Magneten eine derart grosse Hysterese aufweist, dass der Schliessschaltzeitpunkt vom Öffnungsschaltzeitpunkt für den Stromkreis der Anzeigevorrichtung einen zeitlichen Abstand aufweist, der eine Schwenkbewegung des Schalthebels zwischen 0,1 bis 3 Winkelgraden gestattet. Ausserdem ist es vorteilhaft, dass im Sammelbehälter mehrere verschwenkbare Schalthebel über den ansteigenden Schüttkegel nacheinander schaltbar sind. Da die Schaltkontakte als Magnetschalter ausgebildet sind, erhält man die Möglichkeit, den Schliessschaltzeitpunkt und den Öffnungsschaltzeitpunkt mit zeitlichem Abstand zueinander anzuordnen, so dass eine Schwingbewegung des Schalthebels nicht jeweils einen Schaltimpuls auslöst, sondern dass nach Schliessen des Stromkreises mittels des Schaltgebers der Stromkreis auch dann geschlossen bleibt, wenn ein grösserer Teil des Erntegutes vom Schüttkegel abrutscht und der Schalthebel wieder an die Oberfläche des Schüttkegels zurückschwenkt. Auf diese Weise werden Fehlinformationen am Bedienungsstand über die Füllhöhe des Erntegutes ausgeschlossen. Um eine übermässige Schwingbewegung des Schalthebels zu vermeiden, ist es vorteilhaft, wenn die Schwingbewegung des Schalthebels über Reibungsglieder bzw. Endanlageteile dämpfbar ist. Dabei ist es vorteilhaft, dass der Schaltgeber bzw. der Schaltkontakt als induktiver Schalter bzw. als Reedkontaktschalter ausgebildet ist. Durch die Verwendung eines relativ einfachen und kostengünstigen Schalthebels ist es ohne weiteres möglich, zahlreiche Schalthebel im Sammelbehälter auf unterschiedlicher Höhe zu verteilen, um die einzelnen Füllphasen des Sammelbehälters fortlaufend abzutasten.

In der Zeichnung ist ein Ausführungsbeispiel der Vorrichtung zum Anzeigen der Füllmenge des Erntegutes im Sammelbehälter nach der Erfindung schematisch dargestellt. Es zeigt:

Fig. 1 eine Seitenansicht der Vorrichtung zum Anzeigen der Füllmenge in einem nur teilweise dargestellten Mähdrescher mit einem einem Schalthebel zugeordneten Geber zur Schliessung eines Stromkreises für eine Anzeigevorrichtung,

Fig. 2 die Draufsicht des Schalthebels gemäss Fig. 1.

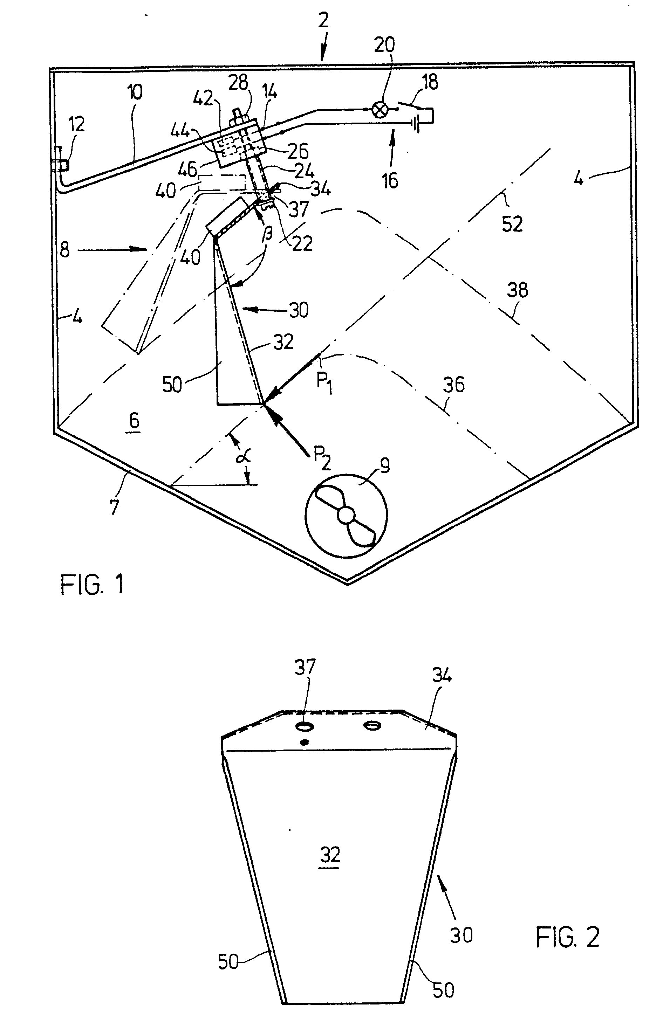

In der Zeichnung ist mit 2 ein Sammelbehälter eines in der Zeichnung nicht dargestellten Mähdreschers bezeichnet, der aus Seitenwänden 4, einer Rück- und Vorderwand 6 sowie einem geneigt verlaufenden Boden 7 besteht, über dem eine Entleerungsschnecke 9 angeordnet ist. Die übrigen Teile des Sammelbehälters 2 sowie die Befüllungsvorrichtung sind der Einfachheit halber fortgelassen. An der einen Seitenwand 4 befindet sich eine Anzeigevorrichtung 8 zur Erfassung der Füllmenge des im Sammelbehälter 2 aufgenommenen Erntegutes. Die in Fig. 1 dargestellte Anzeigevorrichtung 8 ist mit Bezug auf den in der Zeichnung dargestellten Sammelbehälter 2 wesentlich kleiner und kann beispielsweise faustgross sein. Die Anzeigevorrichtung 8 weist eine Halterung 10 auf, die über Schraubenbolzen 12 mit der Seitenwand 4 des Sammelbehälters 2 lösbar verbunden ist. Die Halterung 10 ist mit Bezug auf die Standfläche des Mähdreschers geneigt verlaufend angeordnet und weist an ihrem äusseren oberen Ende einen Magnetschalter bzw. Reedkontakt 14 auf, der über einen elektrischen Stromkreis 16 und einen Schalter 18 mit einer Anzeigevorrichtung, beispielsweise einer oder mehrerer Lampen 20, verbunden ist, die die einzelnen Phasen der Füllmenge des Erntegutes im Sammelbehälter 2 am Bedienungsstand des Mähdreschers anzeigen. Der Einfachheit halber ist der Schalter 18 sowie die zugehörige Lampe 20 in Fig. 1 im Sammelbehälter 2 dargestellt.

An der Halterung 10 befinden sich zwei mit Abstand zueinander angeordnete Bolzen bzw. Schraubenbolzen 22, auf der eine Distanzbuchse 24 angeordnet ist, die einenends gegen den Schraubenkopf des Schraubenbolzens 22, anderenends gegen eine Mutter 26 zur Anlage kommt. Der Schraubenbolzen 22 ist mit der Halterung 10 über eine Mutter 28 lösbar verbunden. An den beiden Schraubenbolzen 22 ist ein Schalthebel 30 schwenkbar gelagert, der, wie Fig. 1 und 2 zeigen, aus einer pyramidenstumpfartigen Platte 32 und einem daran angeschlossenen, abgewinkelten Schenkel 34 besteht.

Der Schenkel 34 ist mit zwei mit Abstand zueinander angeordneten Bohrungen 37 versehen, die auf die Distanzbuchsen 24 der beiden Schraubenbolzen 22 aufschiebbar sind. In der Normallage des Schalthebels 30 verläuft die Platte 32 mit Bezug auf die Standfläche des Mähdreschers etwas geneigt, und zwar in Richtung des Schüttkegels, der im Sammelbehälter durch die Zahl 36 bzw. 38 gekennzeichnet ist. Ferner verläuft die Platte 32 in vertikaler Richtung und mit Bezug auf die Wand 4 des Mähdreschers ebenfalls etwas geneigt, wobei der Winkel β zwischen der Platte 32 und dem Schenkel 34 zwischen 90° und 110° gross sein kann. Auf dem Schenkel 34 befindet sich ein Magnet 40, der über den Schalthebel 30 nach oben in Richtung des Magnetschalters bzw. Reedkontaktes 14 bewegbar ist und den Stromkreis 16 für die Anzeigevorrichtung bzw. Lampe 20 schliesst, um auf diese Weise die Fahrerperson am Bedienungsstand des Mähdreschers über den Füllzustand des Erntegutes im Sammelbehälter zu informieren. Der Magnetschalter 14 kann zwei Schaltkontakte 42 und 44 aufweisen, wobei der Schaltkontakt 42 über den Magneten 40 angezogen wird, so dass dieser gegen den Schaltkontakt 44 zur Anlage kommt und dadurch den Stromkreis 16 schliesst. Derartige Magnetschalter, die auch als Reedkontakte bezeichnet werden, sind völlig wartungsfrei, da sie durch ihr Gehäuse 46 gegen Verunreinigungen geschützt sind.

An der Platte 32 befinden sich, wie insbesondere aus Fig. 1 hervorgeht, zwei dreieckförmige, nach hinten ausgerichtete Leitelemente 50, die mit der Oberfläche der Platte 32 einen annähernd rechten Winkel bilden und dafür sorgen, dass das Erntegut sich nicht hinter der Platte 32 ansammelt, so dass die Schwenkbewegung des Schalthebels 30 durch den Freiraum der durch die Leitelemente 50 gewährleistet wird, stets gesichert ist. In Fig. 1 ist für den Schüttkegel 36 eine Fallinie 52 angegeben, die sich von der Spitze des Schüttkegels nach unten an der Oberfläche des Schüttkegels entlang erstreckt und mit der Standfläche des Mähdreschers bzw. der Hori-zontalen den Schüttwinkel α bildet, der je nach Beschaffenheit des Erntegutes und der Feuchte unterschiedlich gross ausfällt. Das im Sammelbehälter 2 von oben hereinfallende Erntegut rutscht am Schüttkegel 36 ab und drückt mit einer Kraft $P_1$ gegen die untere Kante der Platte 32 und schwenkt diese nach hinten. Wenn ein Teil der unteren Kante der Platte 32 in den Schüttkegel 36 eintaucht, wird über die Kraft $P_2$ die Platte 32 zusätzlich nach oben bewegt und schwenkt gleichzeitig um die quer zur Fallinie 52 verlaufende Achse des Schalthebels 30. Auf diese Weise wird sichergestellt, dass vor Erreichung der Endlagestellung des Schalthebels 30 der Schalthebel 30 nicht von dem Schüttkegel bzw. dem Erntegut umgeben wird, so dass der Schalthebel stets seine Endlagestellung erreicht und damit die entsprechende Füllphase des Erntegutes im Sammelbehälter 2 anzeigt. Wie aus Fig. 1 hervorgeht, ist die Bohrung 37 etwas grösser als die Distanzbuchse 24, so dass der Schalthebel 30 über die Kraft $P_2$ auf der Distanz-buchse 24 auch etwas nach oben verschoben werden kann, ohne dass ein Verkanten auftritt. In der in Fig. 1 gezeigten Endlagestellung sowie der in gestrichelten Linien dargestellten zweiten Endlagestellung des Schalthebels 30 bilden die Kanten der Bohrung 37 Wiederlager und verhindern dadurch eine weitere Verschwenkung des Schalthebels 30. Bei einem weiteren Anwachsen des Schüttkegels 38 kann nun der Schalthebel von dem Erntegut allmählich bedeckt werden, ohne dass seine weitere Funktion beeinträchtigt wird (zweite Endlagestellung, gestrichelte Linien).

Der in Fig. 1 dargestellte Magnetschalter weist eine relativ grosse Hysterese auf, die sicherstellt, dass durch eine Schwingbewegung des Schalthebels 30 die über dem Schalthebel 30 betätigbare Lampe in der Anfangsphase nicht ständig blinkt, sondern auch dann an bleibt, wenn der Schalthebel 30 durch abrutschendes Schüttgut etwas zurückschwenkt. Dies wird durch die entsprechende Hysterese erreicht, die gewährleistet, dass der Schliessschaltzeitpunkt zur Schliessung des Stromkreises 16 einen zeitlichen Abstand zum Öffnungsschaltzeitpunkt aufweist. Anstelle des Magnetschalters 14 kann auch ein induktiver Schalter oder ein mechanischer Schalter bzw. sehr leichtgängiger Schalter vorgesehen sein.

Um eine einwandfreie Verschwenkung des Schalthebels 30 stets zu gewährleisten, ist es vorteilhaft, wenn dieser im Bereich der Böschung bzw. der Falllinie 52 des Schüttkegels 36 bzw. 38 des entsprechenden Erntegutes angeordnet ist und dabei gewährleistet wird, dass das an der Fallinie bzw. dem Schüttkegel abrutschende Erntegut eine Verstellung des Schalthebels 30 bewirkt, die zur Schliessung des Stromkreises 16 führt. Damit durch Erschütterungen bzw. andere Einflüsse eine Aufschwingung des Schalthebels vermieden wird, können Reibungselemente bzw. Dämpfungsglieder dem Schalthebel 30 zugeordnet sein, so dass hierdurch Fehlinformationen am Bedienungsstand des Mähdreschers ausgeschlossen werden, d.h. ein unangenehmer Flacker-zustand der Lampe 20 lässt sich dadurch verhindern. Ebenfalls wird im leeren Zustand des Sammelbehälters 2 durch die bereits erwähnte Hysterese des Magnetschalters 14 ein Flackern bzw. unbeabsichtigtes Betätigen des Magnetschalters 14 vermieden.

## Patentansprüche

1. Vorrichtung zum Anzeigen der Füllmenge des Erntegutes im Sammelbehälter (2) einer Erntegutmaschine, insbesondere Mähdrescher, die aus einem im Sammelbehälter (2) auf einem oder mehreren Bolzen (22) schwenkbar gelagerten Schalthebel (30) und einem über diesen betätigbaren elektrischen Schaltgeber gebildet ist, der einer am Fahrerstand vorgesehenen Anzeigevorrichtung eine Schaltinformation zuführt, wobei der Schalthebel (30) mit Bezug auf seine Schwenkrichtung sich von dem Schüttkegel weg erstreckende, abgewinkelte, seitliche Leitelemente (50) aufweist und seine Schwenkachse quer zu einer Fallinie (52) des Schüttkegels (36) des im Sammelbehälter (2) aufgenommenen Erntegutes verläuft und die in Richtung des Schüttkegels (36) zeigende Vorderseite einer Platte (32) des Schalthebels (30) gegen den geneigt verlaufenden Teil des Schüttkegels (36) zur Anlage kommt und über diesen Teil bzw. das am Schüttkegel abrutschende Erntegut nach hinten in eine den Schaltgeber betätigende Stellung bewegt wird, dadurch gekennzeichnet, dass die an der Rückseite der Platte (32) freitragend angeordneten Leitelemente (50) mit der Platte (32) einen nach hinten offenen Freiraum bilden.

2. Vorrichtung nach Anspruch 1, dadurch gekennzeichnet, dass der Schalthebel (30) an seiner oberen Kante einen mit dem Schalthebel einen stumpfen Winkel (β) bildenden, fest verbundenen Schenkel (34) aufweist, der zur Aufnahme von zwei Bolzen (22) Bohrungen (37) aufweist, deren Durchmesser derart gross sind, dass der Schenkel auf den Bolzen geneigt verlaufend aufsitzt, wobei die Kanten der Bohrungen in den Endlagestellungen des Schalthebels als Anschläge dienen.

3. Vorrichtung nach Anspruch 1 oder 2, dadurch gekennzeichnet, dass der Schalthebel (30) auf dem aufrechtstehenden Bolzen (22) verschwenkbar und verschiebbar gelagert ist, wobei bei Kontaktaufnahme des Schalthebels (30) mit dem Erntegut bzw. beim Eintauchen in das Erntegut der Schalthebel aus dem Erntegut herausbewegbar ist.

4. Vorrichtung nach einem oder mehreren der vorhergehenden Ansprüche, dadurch gekennzeichnet, dass die beiden in etwa vertikal verlaufenden Bolzen (22) mit Abstand an einer im Sammelbehälter vorgesehenen Halterung (10) angeordnet sind, die zur Aufnahme eines Schaltkontaktes bzw. des als Schaltgeber ausgebildeten Magnetschalters (14) dient, gegen den ein Magnet (40) bewegbar ist, der auf dem Schalthebel (30) angeordnet ist.

5. Vorrichtung nach einem oder mehreren der vorhergehenden Ansprüche, dadurch gekennzeichnet, dass der Schaltkontakt bzw. der Magnetschalter (14) mit dem zugehörigen Magneten (40) eine derart grosse Hysterese aufweist, dass der Schliessschaltzeitpunkt vom Öffnungsschaltzeitpunkt für den Stromkreis (16) der Anzeigevorrichtung einen zeitlichen Abstand aufweist, der eine Schwenkbewegung des Schalthebels (30) zwischen 0,1 bis 3 Winkelgraden gestattet.

6. Vorrichtung nach einem oder mehreren der vorhergehenden Ansprüche, dadurch gekennzeichnet, dass im Sammelbehälter (2) mehrere verschwenkbare Schalthebel (30) über den ansteigenden Schüttkegel (36) nacheinander schaltbar sind.

7. Vorrichtung nach einem oder mehreren der vorhergehenden Ansprüche, dadurch gekennzeichnet, dass die Schwingbewegung des Schalthebels (30) über Reibungsglieder bzw. Endlageteile dämpfbar ist.

8. Vorrichtung nach einem oder mehreren der vorhergehenden Ansprüche, dadurch gekennzeichnet, dass der Schaltgeber bzw. der Schaltkontakt als induktiver Schalter bzw. als Reedkontaktschalter ausgebildet ist.

**Claims**

1. Arrangement for indicating the amount of harvested material in the storage tank (2) of a harvesting machine, in particular a combine harvester, formed by a switching lever (30) swingably mounted in the storage tank (2) on one or more bolts (22) and by an electric switching transmitting device which can be operated through the medium of the switching lever and supplies switching information to an indicating device provided in the driver's cab, the switching lever (30) having angled lateral guide elements (50) extending away from the heaped-up cone with respect to its swinging direction and its swinging axis extending transversely of a line of descent (52) of the heaped-up cone (36) of the harvested material accommodated in the storage tank (2) and the front of a plate (32) of the switching lever (30) directed towards the heaped-up cone (36) coming into abutment against the inclined part of the heaped-up cone (36) and being moved rearwardly through the medium of this part or the harvested material slipping down the heaped-up cone into a position actuating the switching transmitting device, characterised in that the guide elements (50) arranged in overhanging fashion on the back of the plate (32) form a free space open to the rear with the plate (32).

2. Arrangement according to claim 1, characterised in that the switching lever (30) has at its top edge an arm (34) forming an obtuse angle (β) with the switching lever and rigidly connected thereto and having holes (37) for receiving two bolts (22), the diameter of the holes being of such a size that the arm rests on the bolts in an inclined position, the edges of the holes serving as abutments in the end positions of the switching lever.

3. Arrangement according to claim 1 or 2, characterised in that the switching lever (30) is mounted swingably and slidably on the upright bolts (22), the switching lever (30) being movable out of the harvested material on the lever making contact with the harvested material or being plunged into the harvested material.

4. Arrangement according to one or more of the preceding claims, characterised in that the two approximately vertically extending bolts (22) are arranged at an interval on a support (10) provided in the storage tank, the support serving to receive a switching contact or the magnetic switch (14) designed as a switching transmitting device and towards which a magnet (40) arranged on the switching lever (30) is movable.

5. Arrangement according to one or more of the preceding claims, characterised in that the switching contact or magnetic switch (14) with the associated magnet (40) has so great a hysteresis that the make switching instant has a time interval from the break switching instant for the circuit (16) which permits a swinging movement of the switching lever (30) of between 0.1 and 3 degrees.

6. Arrangement according to one or more of the preceding claims, characterised in that a plurality of swingable switching levers (30) in the storage tank (2) can be operated in succession through the medium of the rising heaped-up cone (36).

7. Arrangement according to one or more of the preceding claims, characterised in that the swinging movement of the switching lever (30) can be damped through the medium of friction elements or end abutment parts.

8. Arrangement according to one or more of the preceding claims, characterised in that the switching transmitting device or switching contact is in the form of an inductive switch or of a dry-reed contact switch.

**Revendications**

1. Dispositif pour indiquer le degré de remplissage en produits de récolte du réceptacle-collecteur ou trémie (2) d'une machine de récolte, en particulier d'une moissonneuse-batteuse, qui est constitué par un levier de commutation (30) monté de façon à pouvoir pivoter dans la trémie (2) sur un ou plusieurs axes (22), et par un commutateur électrique pouvant être actionné par l'intermédiaire de celui-ci, qui transmet une information de commutation à un dispositif indicateur prévu au poste de conduite, le levier de commutation (30) comportant des éléments de guidage latéraux coudés (50) s'étendant dans une direction d'éloignement du cône d'éboulement par rapport à son sens de pivotement, et son axe de pivotement s'étendant transversalement par rapport à une ligne de pente (52) du cône d'éboulement (36) des produits de récolte recueillis dans la trémie (2) et la face antérieure d'une plaque (32) du levier de commutation (30), orientée vers le cône d'éboulement (36), venant s'appliquer contre la partie inclinée du cône d'éboulement (36) et étant déplacée vers l'arrière jusqu'à une position d'actionnement du commutateur par l'intermédiaire de cette partie où des produits de récolte glissant sur le cône d'éboulement, caractérisé en ce que les éléments de guidage (50) disposés en porte à faux sur la face postérieure de la plaque (32) forment avec la plaque (32) un espace libre ouvert vers l'arrière.

2. Dispositif suivant la revendication 1, caractérisé en ce que le levier de commutation (30) comporte à son bord supérieur une branche (34) reliée rigidement, faisant avec le levier de commutation un angle obtus (β), qui comporte, pour la réception de deux axes (22), des perçages (37) dont le diamètre est tel que la branche repose dans une position oblique sur les axes, les bords des perçages servant de butées dans les positions-limites du levier de commutation.

3. Dispositif suivant la revendication 1 ou 2, caractérisé en ce que le levier de commutation (30) est placé sur l'axe vertical (22) de façon à pouvoir pivoter et se déplacer en translation, le levier de commutation (30) pouvant sortir des produits de récolte lorsque ledit levier de commutation entre en contact avec les produits de récolte ou que ledit levier de commutation pénètre dans les produits de récolte.

4. Dispositif suivant une ou plusieurs des revendications précédentes, caractérisé en ce que les deux axes (22) dirigés sensiblement verticalement sont disposés à une certaine distance sur un support (10) prévu sur la trémie, qui sert à recevoir un contact de commutation ou le contacteur magnétique (14) conformé en commutateur, contre lequel peut se déplacer un aimant (40) qui est placé sur le levier de commutation (30).

5. Dispositif suivant une ou plusieurs des revendications précédentes, caractérisé en ce que le contact de commutation ou le contacteur magnétique (14) avec l'aimant (40) correspondant présente une hystérésis telle que l'instant de commutation de fermeture est à un certain intervalle de temps de l'instant de commutation d'ouverture pour le circuit (16) du dispositif indicateur, qui permet un mouvement de pivotement du levier de commutation (30) compris entre 0,1 et 3 degrés.

6. Dispositif suivant une ou plusieurs des revendications précédentes, caractérisé en ce que plusieurs leviers de commutation (30) pouvant pivoter dans la trémie (2) peuvent assurer des commutations successives par l'intermédiaire du cône d'éboulement (36) de hauteur croissante.

7. Dispositif suivant une ou plusieurs des revendications précédentes, caractérisé en ce que le mouvement oscillant du levier de commutation (30) peut être amorti par l'intermédiaire d'organes de friction ou d'éléments d'application en fin de course.

8. Dispositif suivant une ou plusieurs des revendications précédentes, caractérisé en ce que le commutateur ou le contact de commutation se présente sous la forme d'un contacteur inductif ou d'un contacteur à lame vibrante.

FIG. 1

FIG. 2